# EUROPÄISCHE PATENTANMELDUNG

(11) **EP 3 751 042 A1**
(43) Veröffentlichungstag der Anmeldung: **16.12.2020**
(21) Anmeldenummer: 20176038.6
(22) Anmeldetag: 22.05.2020
(51) Int. Cl.: D06F 39/08, B29C 45/16, F04D 29/16, F04D 29/22, A47L 15/42

(54) **PUMPENIMPELLER, LAUGENPUMPE, HAUSHALTSGERÄT UND VERFAHREN ZUM HERSTELLEN DES PUMPENIMPELLERS**

(30) Priorität: 14.06.2019 DE 102019208727
(71) Anmelder: BSH Hausgeräte GmbH, 81739 München (DE)
(72) Erfinder: Hahn, Kevin, 14548 Schwielowsee (DE); Römer, Raymond, 10965 Berlin (DE); Skrippek, Jörg, 14641 Wustermark (DE)

(57) **Zusammenfassung**

Die vorliegende Erfindung betrifft einen Pumpenimpeller (1) mit Laufradschaufeln (2) für ein Haushaltsgerät, wobei der Pumpenimpeller (1) aus einem Grundmaterial gebildet ist, und wobei das Grundmaterial zumindest teilweise mit einem dauerelastischen Mantelmaterial, welches weicher als das Grundmaterial ist, beschichtet ist.

## Beschreibung

Die vorliegende Erfindung betrifft einen Pumpenimpeller, eine Laugenpumpe mit dem Pumpenimpeller, ein Haushaltsgerät mit der Laugenpumpe und ein Verfahren zum Herstellen des Pumpenimpellers.

Ein Pumpenimpeller einer Pumpe, der beispielsweise in einer Laugenpumpe eines Haushaltsgeräts verwendet wird, ist oft hohen Belastungen durch mit dem zu fördernden Fluid mittransportierten Gegenständen ausgesetzt. Das Fluid kann insbesondere eine Laugenlösung sein (d.h. ein einphasiges Fluid) oder ein Gemisch aus Schaum und Wasser (d.h. ein zweiphasiges Fluid). Bei den Gegenständen kann es sich in Abhängigkeit von der Art des Haushaltsgeräts beispielsweise um Münzen, Büroklammern, harte Speisereste und dergleichen handeln. Das Haushaltsgerät kann beispielsweise eine Waschmaschine, ein Waschtrockner, ein Wäschetrockner, eine Geschirrspülmaschine usw. sein. Die mittransportierten Gegenstände können während einem Pumpvorgang auf die Oberfläche des Pumpenimpellers auftreffen und können diesen insbesondere durch ihre kinetische Energie beschädigen, so dass sich die Geometrie des Pumpenimpellers soweit ändert, dass diese Geometrieveränderung einen negativen Einfluss auf die Pumpleistung hinsichtlich des Förderstroms und des Druckaufbaus haben kann. Dadurch kann ein erforderlicher Betrieb der Pumpe, in der der Pumpenimpeller verbaut ist, nicht hinreichend über die Lebensdauer der Pumpe sichergestellt sein. Mit anderen Worten, kann der Pumpenimpeller so beschädigt werden, dass ein ursprünglich angedachter Betriebspunkt (Druck-Förderstrom-Verhältnis) der Pumpe nicht mehr erreicht werden kann.

Jedoch ist eine Anforderung an einen oben beschrieben Pumpenimpeller, dass dieser einfach aufgebaut ist und kostengünstig herstellbar ist.

Aus der WO 2017/137173 A1 ist ein Wäschepflegegerät bekannt, das eine Pumpe zum Pumpen von Waschflüssigkeit aufweist, wobei die Pumpe ein Pumpengehäuse mit einem Hohlraum aufweist, wobei das Wäschepflegegerät ein Bauteil aufweist, welches in dem Hohlraum aufgenommen ist, wobei an einer Innenseite des Hohlraums des Pumpengehäuses ein Dichtelement aus Kunststoff angeordnet ist. Das Dichtelement ist stoffschlüssig mit dem Pumpengehäuse verbunden. Das Dichtelement beaufschlagt das Pumpengehäuse und das Bauteil mit Druck, um eine fluidtechnische Abdichtung zwischen dem Pumpengehäuse und dem Bauteil sicherzustellen. Ferner weist die Innenseite des Pumpengehäuses eine elastische verformbare Innenbeschichtung auf.

Der vorliegenden Erfindung liegt die Aufgabe zugrunde einen Pumpenimpeller, eine Laugenpumpe, ein Haushaltsgerät und ein Verfahren zum Herstellen des Pumpenimpellers vorzuschlagen, bei dem/der ein zuverlässiger Betrieb und eine konstante Leistung des Pumpenimpellers über dessen Lebensdauer sichergestellt ist, während gleichzeitig eine einfache und kostengünstige Herstellung gewährleistet ist. Erfindungsgemäß wird die Aufgabe durch einen Pumpenimpeller mit Laufradschaufeln für ein Haushaltsgerät mit den Merkmalen des Patentanspruchs 1, eine Laugenpumpe für ein Haushaltsgerät mit den Merkmalen des Patentanspruchs 6, ein Haushaltsgerät mit den Merkmalen des Patentanspruchs 13 und ein Verfahren zum Herstellen eines Pumpenimpellers mit den Merkmalen des Patentanspruchs 14 gelöst.

Demnach weist ein Pumpenimpeller für ein Haushaltsgerät Laufradschaufeln auf. Der Pumpenimpeller kann ein Pumpenlaufrad, insbesondere ein von einem Gehäuse zumindest teilweise umschlossener Propeller sein. Bei dem Pumpenimpeller kann es sich insbesondere um einen Pumpenimpeller für eine Radialpumpe handeln. Der Pumpenimpeller kann um eine Drehachse herum drehbar sein. Beispielsweise kann der Pumpenimpeller zwei, drei, vier oder sechs oder mehr Laufradschaufeln umfassen, die sich im Wesentlichen in einer Radialrichtung der Drehachse erstrecken. Die Laufradschaufeln können sich gerade oder gekrümmt in der Radialrichtung erstrecken.

Der Pumpenimpeller ist aus einem Grundmaterial gebildet. Das Grundmaterial kann eine feste Kunststoffkomponente sein, die insbesondere die Funktion der Kraft- bzw. Drehmomentübertragung von einem Motor, der den Pumpenimpeller antreiben kann, zu einem zu fördernden Fluid übernehmen kann. Als das Grundmaterial kann insbesondere ein Polyoxymethylen (POM), ein hochwertiges Polypropylen (PP) oder dergleichen verwendet werden. Zudem kann zur Steigerung der Festigkeit des Pumpenimpellers dem Grundmaterial ein Armierungsmittel, insbesondere Glasfasern zugefügt werden, um die Festigkeit des Pumpenimpellers zu erhöhen.

Das Grundmaterial ist zumindest teilweise mit einem dauerelastischen Mantelmaterial, welches weicher als das Grundmaterial ist, beschichtet. Das Grundmaterial kann mit dem Mantelmaterial bedeckt sein. Das Mantelmaterial kann eine weiche zweite Kunststoffkomponente sein, die insbesondere die Funktion haben kann, den aus dem Grundmaterial gebildeten Pumpenimpeller gegen Stöße und Abschürfungen - also oberflächliche Abrasion - durch Gegenstände in dem zu fördernden Fluid, insbesondere einen in einer Pumpendruckkammer befindlichen Fremdkörper zu schützen. Mit anderen Worten kann das Mantelmaterial eine Dämpfungswirkung gegen auf den Pumpenimpeller auftreffende Gegenstände aufweisen. Zudem oder alternativ kann das Mantelmaterial eine Abdichtfunktion aufweisen indem es insbesondre so ausgebildet ist, dass es einen Axialspalt oder einen Radialspalt, insbesondere zwischen dem Pumpenimpeller und einem Pumpengehäuse minimieren oder vollständig verschließen kann. Ferner kann das Mantelmaterial ein Verschleißschutz für den Pumpenimpeller und benachbarte Komponenten gewährleisten. Das Mantelmaterial kann ein thermoplastischer Kunststoff sein, insbesondere thermoplastische Polyamidelastomere (TPE-A), thermoplastische Coplyesterelastomere (TPE-E), thermoplastische Elastomere auf Olefinbasis, insbesondere PP/EPDM (TPE-O), thermoplastische Styrol-Blockcopolymere, insbesondere SBS, SEBS, SEPS, SEEPS und MBS, (TPE-S), thermoplastische Elastomere auf Urethanbasis (TPE-U), thermoplastische Vulkanisate oder vernetzte thermoplastische Elastomere auf Olefinbasis, insbesondere PP/EPDM (TPE-V) oder nicht klassifizierte thermoplastische Elastomere jeglicher anderer Zusammensetzung oder Struktur (TPZ). Das Mantelmaterial kann so angepasst und ausgewählt sein, dass es dem Einsatzbereich entsprechend Kriterien wie beispielsweise Temperaturbeständigkeit, Druckverformungsrest, Druckspannungsrelaxation, Lebensmittelbeständigkeit, Shore-Härte, Dichte usw. hinreichend entsprochen sein kann. Insbesondere kann das Mantelmaterial abhängig von der Funktion eine Shore-Härte von 70 bis 150 ShA für die Dämpfungswirkung, 40 bis 120 ShA für eine Abdichtfunktion und/oder 100 bis 180 ShA für einen Verschleißschutz aufweisen. Das Mantelmaterial kann so auf dem Grundmaterial angeordnet sein, dass, während einem Betrieb des Pumpenimpellers, die Teile des Pumpenimpellers, die mit einem zu fördernden Fluid in Kontakt sind, mit dem Mantelmaterial bedeckt sind. Alternativ kann das Mantelmaterial nur auf den Laufradschaufeln aufgebracht sein.

Die Verwendung von dauerelastischen Materialien am Pumpenimpeller kann einen Verschleißschutz für den Pumpenimpeller gegen mitrotierende Fremdkörper erzielen. Die Beschichtung des Grundmaterials bietet den Vorteil, dass eine Förderleistung der Pumpe, in der der Pumpenimpeller verbaut ist, über die Einsatzzeit der Pumpe konstant beibehalten werden kann, da Beschädigungen des Pumpenimpeller vermieden werden können. Mit anderen Worten kann eine Geometrieänderung des Pumpenimpellers, insbesondere des Pumpenimpellerdurchmessers, dessen Maß quadratisch für den Förderstrom der Pumpe verantwortlich ist, vermieden werden. Ferner kann durch das Mantelmaterial eine Aufrauhung des Pumpenimpellers und damit ein Leistungsverlust der Pumpe vermieden werden. Ferner kann dadurch ein erhöhter Geräuschpegel beim Betrieb des Pumpenimpellers durch Aufrauhung und Deformation vermieden werden. Ebenso kann der Geräuschpegel beim Fremdkörpertransport durch den mit dem Mantelmaterial versehenen Pumpenimpeller reduziert sein. Darüber hinaus kann eine einfachere Antriebsdrehzahlregelung vorgesehen sein, da Stromspitzen einer Antriebseinheit zum Antreiben des Pumpenimpellers vermieden werden können. Genauer gesagt entstehen Stromspitzen herkömmlicherweise, wenn Fremdkörper auf den Pumpenimpeller auftreffen und diesen abbremsen. Bei der vorliegenden Ausführungsform können Fremdkörper durch das Mantelmaterial so abgebremst werden, dass der Pumpenimpeller nicht mehr so stark abgebremst wird.

Vorzugsweise sind das Grundmaterial und das Mantelmaterial stoffschlüssig miteinander verbunden. Dabei kann eine stoffschlüssige Verbindung eine Verbindung sein, bei der die Verbindungspartner durch atomare oder molekulare Kräfte zusammengehalten werden. Ferner kann die stoffschlüssige Verbindung eine nicht lösbare Verbindung sein, die sich nur durch Zerstörung trennen lässt. Eine stoffschlüssige Verbindung kann insbesondere durch ein besonders angepasstes Spritzgussverfahren, insbesondere durch das 2K-Verfahren oder das 3K-Verfahren hergestellt werden. Mit anderen Worten kann bei dem 2K-Verfahren das Grundmaterial und das Mantelmaterial in einem Sandwich-Verfahren miteinander verbunden werden. Bei dem 2K-Verfahren kann bei der Herstellung in einem fertigungstechnischen Zusatzschritt das Grundmaterial mit dem Mantelmaterial umspritzt und somit formschlüssig damit verbunden werden.

Gemäß einer weiteren Ausführungsform kann der Pumpenimpeller eine runde Laufradscheibe, die so vorgesehen ist, dass alle Laufradschaufeln an einer Seite der Laufradscheibe vorgesehen sind, und eine in Umfangsrichtung der Laufradscheibe umlaufende Rippe, die in einer Radialrichtung der Laufradscheibe vorsteht, aufweisen. Die Laufradscheibe kann eine tellerartige, flache Form aufweisen, die integral (d.h. einstückig) mit den Laufradschaufeln ausgebildet sein kann. Eine Dicke der Laufradscheibe kann im Verhältnis zu ihrem Durchmesser klein sein. Die Laufradscheibe kann insbesondere dazu ausgestaltet sein, eine rückseitige Abdichtung einer Welle mittels eines Kragens oder eines Labyrinths sicherzustellen, wobei der Pumpenimpeller mittels der Welle angetrieben werden kann. Dabei kann die Abdichtfunktion durch das Mantelmaterial an der Laufradscheibe bewerkstelligt sein. Die Laufradscheibe kann so an dem Pumpenimpeller vorgesehen sein, dass ein Mittelpunkt der Laufradscheibe auf der Drehachse des Pumpenimpellers liegt. Die Laufradscheibe kann sich teilweise oder vollständig über die radiale Erstreckungslänge der Laufradschaufeln erstrecken. Mit anderen Worten kann die Laufradscheibe eine halbe- oder kleine Laufradscheibe sein, wobei sich halb oder klein auf den Durchmesser der Laufradscheibe hinsichtlich des Durchmessers der Laufradschaufeln beziehen kann.

Dadurch können Verblockungen zwischen dem Pumpenimpeller und dem Pumpengehäuse vermieden sein. Ferner kann ein Aufwickeln von Haaren, Flusen oder Fäden um die Welle vermieden werden. Darüber hinaus können Langzeitablagerungen hinter dem Pumpenimpeller (d.h. zwischen Pumpenimpeller und Pumpengehäuse) vermieden werden, die das Reibmoment und damit eine Erwärmung der Antriebseinheit negativ beeinflussen können und gegebenenfalls sogar eine Blockade des Pumpenimpellers provozieren können. Ferner kann eine Sekundärströmung, die durch die hinsichtlich des Pumpenimpellers vor- und rückseitigen Luftdruckunterschiede verursacht werden kann, vermieden werden.

Die Laufradschaufeln können orthogonal von der Laufradscheibe vorstehen. Die umlaufende Rippe kann dieselbe Dicke wie die Laufradscheibe, ein eine geringere Dicke oder eine größere Dicke aufweisen. Die Rippe kann in der Radialrichtung der Laufradschaufeln über die Laufradschaufeln hinausragen. Die Rippe kann so an der Umfangsseite der Laufradscheibe angeordnet sein, dass sie bündig zu der Seite der Laufradscheibe ist, an der keine Laufradschaufeln vorgesehen sind. Alternativ kann die Rippe so an der Umfangseite der Laufradscheibe angeordnet sein, dass sie bündig zu der Seite der Laufradscheibe ist, an der die Laufradschaufeln vorgesehen sind. Dadurch kann der Vorteil bestehen, dass etwaige kleine Fremdkörper, die hinter die Laufradscheibe (d.h. zwischen die Laufradscheibe und das Pumpengehäuse) gelangen konnten, einen Drang haben können, besser ausgespült zu werden. Es können auch mehr als eine Rippe an der Umfangseite der Laufradscheibe vorgesehen sein.

Vorzugsweise ist die Rippe aus dem Mantelmaterial oder aus einem Dichtmaterial, das weicher als das Mantelmaterial ist, gebildet. Im Falle, dass die Rippe aus dem Mantelmaterial gebildet ist, kann die Rippe in einem Verfahrensschritt integral mit dem Mantelmaterial ausgebildet sein. Das Dichtmaterial kann eines der oben genannten Materialien seien, welches eine Shore-Härte von 40 bis 120 ShA für eine Abdichtfunktion und/oder 100 bis 180 ShA für einen Verschleißschutz aufweisen kann und weicher als das Mantelmaterial ist.

Vorzugsweise weist die Rippe eine sich im Querschnitt verjüngende Form auf. Die Rippe kann beispielsweise eine im Querschnitt dreiecksartige Form aufweisen. Insbesondere kann sich die Rippe in der Radialrichtung der Laufradscheibe verjüngen.

Gemäß einer weiteren Ausführungsform der vorliegenden Erfindung umfasst eine Laugenpumpe für ein Haushaltsgerät einen Pumpenflansch, eine Antriebseinheit, und den Pumpenimpeller gemäß einer der obigen Ausführungsformen, wobei die Laugenpumpe dazu ausgestaltete ist Fluid zu fördern und der Pumpenimpeller so an dem Pumpenflansch angeordnet ist, dass er über eine Welle von der Antriebseinheit drehend angetrieben werden kann. Der Pumpenflansch kann ein Motorflansch der Antriebseinheit sein. Die Laugenpumpe kann eine Radialpumpe sein. Als Antriebseinheit kann ein Synchronantrieb verwendet werden. Die Welle kann mittels einer los-los-Wellenlagerung (d.h. mittels einer Radiallagerung) gelagert sein. Daher kann sich eine axiale Positionierung und axiale Zentrierung des permanent erregten Rotors im Magnetfeld des Stators insbesondere durch die magnetischen Feldkräfte und die hydraulischen Kräfte, die auf den Pumpenimpeller wirken, ergeben. Dabei können eine Größe und ein Betrag der hydraulisch wirkenden Kräfte vom vorherrschenden Betriebspunkt (d.h. dem Druck-Förderstrom-Verhältnis), von der Geometrie des Pumpenimpellers und von der Beschaffenheit des zu fördernden Fluids abhängig sein. Das Fluid kann dabei einphasiges oder mehr mehrphasig vorliegen, sodass sich davon abhängig unterschiedliche hydraulische Axialkräfte einstellen. Aufgrund der los-los-Lagerung kann ein ausreichender Axialspalte zwischen dem Pumpenimpeller und dem Pumpenflansch vorgesehen sein, um für alle Betriebspunkte und Fluidzustände ein axiales Anlaufen (d.h. ein Kontakt) des Pumpenimpellers mit anderen Komponenten, insbesondere mit dem Pumpenflansch und/oder mit einem Lagerträger vermeiden zu können. Der Axialspalt zwischen dem Pumpenimpeller und dem Pumpenflansch kann im einstelligen Millimeterbereich liegen. Insbesondere kann der Axialspalt zwischen 0,5 bis 5,0 mm, vorzugsweise zwischen 1,0 und 2,0 mm liegen. Der Pumpenflansch kann zwischen dem Pumpenimpeller und der Antriebseinheit vorgesehen sein und von der Welle durchdrungen sein. Ferner kann der Pumpenflansch als ein Teil des Pumpengehäuses ausgeführt sein. Das Pumpengehäuse kann eine Saugkammer und eine Druckkammer umfassen. Ferner kann das Pumpengehäuse aus einem kostengünstigen Kunststoff, insbesondere aus Polypropylen (PP), der zu diesem Zweck entweder mit Kalk oder Kreide gefühlt sein kann, hergestellt sein.

Durch die Verwendung des Mantelmaterials am Pumpenimpeller kann der Verschleiß des Pumpenimpellers verringert werden. Zudem können durch das Mantelmaterial als abriebfestes Dichtungselement Spalten zwischen Bauteilen insbesondere der Axialspalt verringert werden, um zu verhindern, dass sich Verunreinigungen insbesondere Flusen und/oder Haare zwischen den Pumpenflansch und den Pumpenimpeller anlagern. Ferner kann verhindert werden, dass sich diese Ablagerungen durch die Drehung des Pumpenimpellers Aufwickeln und ein zusätzliches Reibmoment erzeugen. Ein solches Reibmoment kann so groß werden, dass das Antriebsmoment nicht mehr ausreicht, um den Pumpenimpeller anzutreiben.

Gemäß einer weiteren Ausführungsform der vorliegenden Erfindung umfasst eine Laugenpumpe für ein Haushaltsgerät einen Pumpenflansch, eine Antriebseinheit, und den Pumpenimpeller gemäß einer der obigen Ausführungsformen mit der Laufradscheibe, wobei die Laugenpumpe dazu ausgestaltete ist Fluid zu fördern und der Pumpenimpeller so an dem Pumpenflansch angeordnet ist, dass er über eine Welle drehend von der Antriebseinheit angetrieben werden kann, wobei die Seite der Laufradscheibe, an der keine Laufradschaufeln vorgesehen sind, dem Pumpenflansch zugewandt ist. Bei dieser Ausführungsform gelten auch die zu der vorherigen Ausführungsform gemachten Ausführungen gleichermaßen. Die Laufradscheibe kann so ausgestaltet sein, dass sie den Kragen des Pumpenflanschs in Radialrichtung der Laufradscheibe überragt und umgreift. Insbesondere kann in diesem Fall die Laufradscheibe als eine J-Lippe ausgestaltet sein, die um den Kragen herum axial nach hinten gerichtet ist. Bei einer solchen Ausgestaltung kann eine auf-Stoß Toleranz vermieden sein. Ferner kann das Mantelmaterial an dem Pumpenimpeller so dimensioniert sein, dass der Pumpenimpeller hinsichtlich des Kragens übermäßig gestaltet ist (d.h. einen größeren oder gleichgroßen Durchmesser aufweist wie der Innendurchmesser des Kragens), so dass sich während einem Betrieb ein radialer Laufspalt schleifend einstellen kann. Ferner kann das Mantelmaterial, das in Radialrichtung an der Laufradscheibe vorgesehen ist, in Radialrichtung der Laufradscheibe konisch gestaltet sein. Damit kann ein Einschleifprozess mit geringeren Reibmomenten erfolgen, verglichen mit einem Fall, bei dem sich das Mantelmaterial mit konstanter Dicke von der Laufradscheibe weg erstreckt.

Vorzugsweise weist bei der Laugenpumpe gemäß der obigen Ausführungsform der Pumpenflansch einen ringförmigen Kragen mit einem Innendurchmesser, der größer als der Außendurchmesser der Laufradscheibe ist, auf. Der Kragen kann orthogonal von dem Pumpenflansch in der Erstreckungsrichtung der Welle vorstehen. Ferner kann die Laufradscheibe so in dem Kragen aufgenommen sein, dass der Kragen die Laufradscheibe in der Umfangsrichtung umgibt und die Rippe kann so von der Laufradscheibe radial nach außen vorstehen, dass ein Radialspalt zwischen der Laufradscheibe und dem Kragen minimiert oder vollständig geschlossen ist. Der Radialspalt zwischen dem Pumpenimpeller und dem Kragen kann zwischen 0,5 bis 5,0 mm, vorzugsweise zwischen 1,0 bis 2,0 mm betragen. In dem Fall, bei dem der Radialspalt vollständig geschlossen ist, kann zwischen der Rippe und dem Kragen des Pumpenflanschs ein schleifender Kontakt herrschen. Der Kragen kann sich dabei soweit in Richtung des Pumpenimpellers erstrecken, dass der Pumpenimpeller selbst bei der oben beschriebenen Axialbewegung stets von dem Kragen umgeben sein kann. Ferner kann der Kragen koaxial zu der Welle angeordnet sein, die durch den Pumpenflansch hindurchtritt.

Dadurch kann zuverlässig verhindert sein, dass sich Fremdkörper zwischen dem Pumpenimpeller und dem Pumpenflansch im Bereich der Welle anlagern können. Folglich kann die Betriebssicherheit der Laugenpumpe verbessert sein.

Vorzugsweise weist der Pumpenflansch einen kreisförmigen Vorsprung mit einem Außendurchmesser, der kleiner als der Außendurchmesser der Laufradscheibe ist, auf. Ferner kann die Laufradscheibe einen umlaufenden Laufradscheibenkragen aufweisen, in den der Vorsprung aufgenommen ist. Mit anderen Worten kann der Laufradscheibenkragen der Laufradscheibe in Richtung des Pumpenflanschs vorstehen. Vorzugsweise kann die Rippe so von dem Laufradscheibenkragen der Laufradscheibe radial nach innen vorstehen, dass ein Radialspalt zwischen dem Laufradscheibenkragen und dem Vorsprung minimiert oder vollständig geschlossen ist. In dem Fall, bei dem der Radialspalt vollständig geschlossen ist, kann zwischen der Rippe und dem Vorsprung ein schleifender Kontakt herrschen. Der Laufradscheibenkragen der Laufradscheibe kann sich soweit in Richtung des Pumpenflanschs erstrecken, dass selbst bei der oben beschriebenen Axialbewegung der Vorsprung stets von dem Laufradscheibenkragen der Laufradscheibe umgeben ist. Der Laufradscheibenkragen kann eine runde Form aufweise und koaxial zu der Laufradscheibe und der Welle sein, so dass die Welle von dem Laufradscheibenkragen umgeben sein kann. Die Rippe kann auch bei dieser Ausgestaltung einen sich verjüngenden Querschnitt, insbesondere eine Drecksform aufweisen. Insbesondere kann sich die Rippe in Richtung zu der Welle in der Radialrichtung verjüngen.

Wie bei der obigen Ausführungsform bietet diese Ausgestaltung den Vorteil, dass sich keine Fremdkörper zwischen dem Pumpenimpeller und dem Pumpenflansch im Bereich der Welle anlagern können.

Vorzugsweise kann die Laugenpumpe eine elastische, die Welle umgebende Wellenhülse umfassen, die zwischen der Laufradscheibe und dem Pumpenflansch vorgesehen sein kann, wobei die Wellenhülse so ausgestaltet sein kann, dass sie mit der Laufradscheibe und dem Pumpenflansch in Kontakt ist, selbst wenn sich die Laufradscheibe relativ zu dem Pumpenflansch verlagert, so dass ein Axialspalt zwischen der Laufradscheibe und dem Pumpenflansch im Wesentlichen abgedichtet sein kann. Die Wellenhülse kann ein Wellenkragen oder eine Wellenschutzhülse sein. Die Wellenhülse kann koaxial zu der Welle und der Drehachse angeordnet sein. Dabei kann die Wellenhülse so ausgebildet sein, dass sie sich, wenn sich der Pumpenimpeller in der Axialrichtung bewegt, in der Radialrichtung hebt bzw. wölbt, wenn sich der Axialspalt verkleinert. Ferner kann die Wellenhülse aus einem dauerelastischen Material gebildet sein. Zudem oder alternativ kann die Wellenhülse geometrisch so ausgebildet sein, dass sie sich entsprechend der Axialbewegung des Pumpenimpellers anpassen kann, so dass bei einer Verkleinerung des Axialspalts hinter dem Pumpenimpeller keine großen Anpressdrücke durch die Verformung der Wellenhülse auftreten können. Dadurch kann vermieden werden, dass zu hohen Reibmomenten zwischen der Wellenhülse und dem damit in Kontakt befindlichen Element kommt. Die geometrische Ausgestaltung kann insbesondere durch eine S-Form und/oder durch eine Variation der Dicke der Wellenhülse bewerkstelligt sein, so dass sich Kräfte, die zur Verformung der Wellenhülse nötig sind, reduzieren lassen. Die Wellenhülse kann im Verhältnis zu dem Durchmesser der Laufradscheibe einen kleinen Durchmesser aufweisen. Insbesondere kann die Wellenhülse eine Wellenschutzhülse sein.

Die Wellenhülse kann hinsichtlich der Laufradscheibe einen kleinen Durchmesser bzw. Radius aufweisen. Aufgrund des kleineren Radius der Wellenhülse kann ein resultierendes Reibmomenten, das zwischen der Wellenhülse und dem feststehenden Element also entweder dem Pumpenflansch oder der Laufradscheibe, herrscht, reduziert sein, da der wirksame Hebelarm, der aus dem hydraulischen Druck auf den Pumpenimpeller resultiert, reduziert sein kann. Dadurch kann der Axialspalt zwischen dem Pumpenimpeller und dem Pumpenflansch weiter abgedichtet sein, wodurch ein Eindringen von Fremdkörpern in den Bereich um die Welle verhindert sein kann. Dadurch kann die Standfestigkeit und die Lebensdauer der Laugenpumpe erhöht sein.

Vorzugsweise ist die Wellenhülse entweder an dem Pumpenflansch oder an der Laufradscheibe angebracht. Die Wellenhülse kann integral mit dem Pumpenflansch (d.h. die Wellenhülse kann sich nicht mit dem Pumpenimpeller mitdrehen) oder der Laufradscheibe (d.h. die Welthülse kann ein mit dem Pumpenimpeller mitrotierendes Element sein) ausgebildet sein. Alternativ kann die Wellenhülse auch durch eine reibschlüssige Verbindung an dem Pumpenflansch oder dem Pumpenimpeller angebracht sein. Ferner kann die Wellenhülse auch durch eine Klebeverbindung an dem Pumpenflansch oder dem Pumpenimpeller angebracht sein. Die Wellenhülse kann ähnlich einer mit einer Feder vorgespannten Gleitringdichtung funktionieren und daher den Axialspalt zwischen Pumpenflansch und Pumpenimpeller zuverlässig abdichten. Die Wellenhülse kann dabei aber geringere Reibmomente erzeugen als eine vorgespannte Gleitringdichtung.

Dadurch kann eine Verlagerung der Wellenhülse verhindert werden und der Axialspalt zwischen Pumpenflansch und Pumpenimpeller kann noch zuverlässiger abgedichtet sein. Ferner kann sich die Wellenhülse bei Verschleiß selbstständig nachstellen.

Vorzugsweise kann die Wellenhülse aus dem Mantelmaterial oder aus einem/dem Dichtmaterial, das weicher als das Mantelmaterial ist, gebildet sein. Das Dichtmaterial kann dabei einen geringeren Shore-Härtewert aufweisen als das Mantelmaterial.

Gemäß einer weiteren Ausführungsform der vorliegenden Erfindung weist ein Haushaltsgerät einen Behandlungsraum, und die Laugenpumpe gemäß einer der obigen Ausführungsformen, die dazu ausgestaltet ist ein Fluid aus dem Behandlungsraum abzupumpen, auf. Das Haushaltsgerät kann insbesondere eine Waschmaschine, ein Waschtrockner, ein Wäschetrockner oder eine Geschirrspülmaschine sein. Ferner kann das Wäschebehandlungsgerät die Laugenpumpe dazu nutzen, um ein Fluid abzupumpen und/oder umzupumpen.

Gemäß einer weiteren Ausführungsform der vorliegenden Erfindung umfasst ein Verfahren zum Herstellen eines Pumpenimpellers Einspritzen von flüssigem Grundmaterial in eine Spritzgussform, Aushärten des Grundmaterials bis zu einem vorbestimmten Aushärtegrad, Anpassen der Spritzgussform, um einen vorbestimmten Raum darin zu schaffen, Einspritzen von flüssigem Mantelmaterial, sodass das Grundmaterial zumindest teilweise umspritzt wird und das Grundmaterial und das Mantelmaterial eine stoffschlüssige Verbindung eingehen, und Aushärten des Pumpenimpellers. Bei dem Schritt des Einspritzens von flüssigem Grundmaterial, kann das Grundmaterial entsprechend seiner chemischen Eigenschaften bis zu einer bestimmten Temperatur erhitzt werden, so dass es in einem herkömmlich bekannten Spritzgussverfahren verwendet werden kann. In dem Schritt des Aushärtens, kann das Grundmaterial nur soweit ausgehärtet werden, dass bei dem nachfolgenden Einspritzen von Mantelmaterial, beide Materialien eine stoffschlüssige Verbindung miteinander eingehen. Um, nachdem das Grundmaterial in die Form eingespritzt ist, genügend Raum für das Mantelmaterial zu schaffen, kann die Form beispielsweise eine vorbestimmte Strecke geöffnet werden. Bei dem Einspritzen von flüssigem Mantelmaterial, kann das Grundmaterial vollständig oder teilweise umspritzt werden. Bei dem Umspritzten kann es sich um eine Aufdickung insbesondere in alle Richtungen also axial und radial um Laufradschaufeln und eine Laufradscheibe des Laufradimpellers handeln. Folglich können alle Elemente des Laufradimpellers, die mit einem Fluid, während einem Betrieb des Laufradimpellers, in direktem Austausch stehen, mit dem Mantelmaterial geschützt sein. Die radiale Aufdickung an der Laufradscheibe mit Mantelmaterial kann so ausgebildet sein, dass ein Radialspalt zwischen dem Pumpenimpeller und einem feststehenden Kragen oder Vorsprung eines Pumpenflanschs minimiert oder vollständig geschlossen sein kann.

Vorzugsweise umfasst das Verfahren zwischen dem Schritt des Einspritzens von flüssigem Mantelmaterial und dem Aushärten des Pumpenimpellers ferner die folgenden Schritte Aushärten des Grundmaterials und des Mantelmaterials bis zu einem vorbestimmten Aushärtegrad, Anpassen der Spritzgussform, um einen vorbestimmten Raum darin zu schaffen, und Einspritzen von flüssigem Dichtmaterial, um eine Rippe und/oder eine Wellenhülse zu bilden.

Dadurch kann das Dichtmaterial als dritte Komponente stoffschlüssig direkt oder indirekt mit dem Mantelmaterial und/oder dem Grundmaterial verbunden sein. Das Verfahren kann insbesondere ein 3K-Verfahren sein. Dadurch kann eine höhere Variabilität hinsichtlich verschiedener Härtegrade der unterschiedlichen Materialien gegeben sein. Folglich kann der Pumpenimpeller besser an die Anforderungen im jeweiligen Einsatzbereich angepasst sein.

Im Folgenden werden Ausführungsformen der vorliegenden Erfindung unter Bezugnahme auf die beigefügten Figuren im Detail beschrieben. Dabei zeigen:
- Fig. 1: eine perspektivische Ansicht eines Pumpenimpellers gemäß einer Ausführungsform der vorliegenden Erfindung,
- Fig. 2: eine Draufsicht auf einen an einer Laugenpumpe montierten Pumpenimpeller gemäß einer Ausführungsform der vorliegenden Erfindung,
- Fig.3: eine Schnittansicht der Laugenpumpe gemäß einer Ausführungsform der vorliegenden Erfindung entlang der Schnittlinie A-A aus Fig. 2
- Fig. 4: einen Teil der Laugenpumpe gemäß einer Ausführungsform der vorliegenden Erfindung in einem Ausschnitt der Schnittansicht, die der aus Fig. 3 entspricht,
- Fig. 5: einen Teil der Laugenpumpe gemäß einer Ausführungsform der vorliegenden Erfindung in einem Ausschnitt der Schnittansicht, die der aus Fig. 3 entspricht,
- Fig. 6: eine Schnittansicht eines Teils einer Laugenpumpe gemäß einer Ausführungsform der vorliegenden Erfindung, und
- Fig. 7: eine Schnittansicht eines Teils einer Laugenpumpe gemäß einer Ausführungsform der vorliegenden Erfindung.

In den Figuren sind gleiche Merkmale mit gleichen Bezugszeichen gekennzeichnet. Alles was sich auf das Verfahren bezieht, bezieht sich auch auf den Pumpenimpeller, die Laugenpumpe und das Haushaltsgerät und umgekehrt.

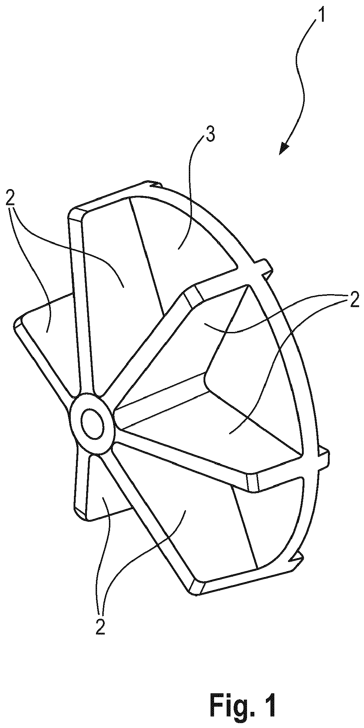

Fig. 1 zeigt einen Pumpenimpeller 1 gemäß einer Ausführungsform der vorliegenden Erfindung. Der Pumpenimpeller 1 umfasst Laufradschaufeln 2 und eine Laufradscheibe 3. Dabei sind die Laufradschaufeln 2 an einer Seite der Laufradscheibe 3 angeordnet. Die Laufradschaufeln 2 erstrecken sich in einer Radialrichtung der Laufradscheibe 3 und orthogonal dazu. Die vorliegende Ausführungsform umfasst sechs Laufradschaufeln 2.

Der Pumpenimpeller 1 ist aus einem Grundmaterial gebildet, d.h. die Laufradschaufeln 2 und die Laufradscheibe 3 sind aus dem Grundmaterial gebildet. Zudem sind die Laufradschaufeln 2 und der radial äußerste Teil der Laufradscheibe 3, d.h. ein Bereich zwischen 2mm und 5 mm vom äußeren Rand der Laufradscheibe 3, mit einem Mantelmaterial beschichtet. Das Mantelmaterial ist weicher als das Grundmaterial. Gemäß einer weiteren Ausführungsform umfasst die Laufradscheibe 3 einen Umfangskragen, der an der Umfangsfläche der Laufradscheibe 3 versehen ist und aus dem Mantelmaterial gebildet oder damit beschichtet ist. Gemäß einer anderen Ausführungsform der vorliegenden Erfindung ist die komplette Oberfläche der Laufradschaufeln 2 und der Laufradscheibe 3 mit dem Mantelmaterial bedeckt.

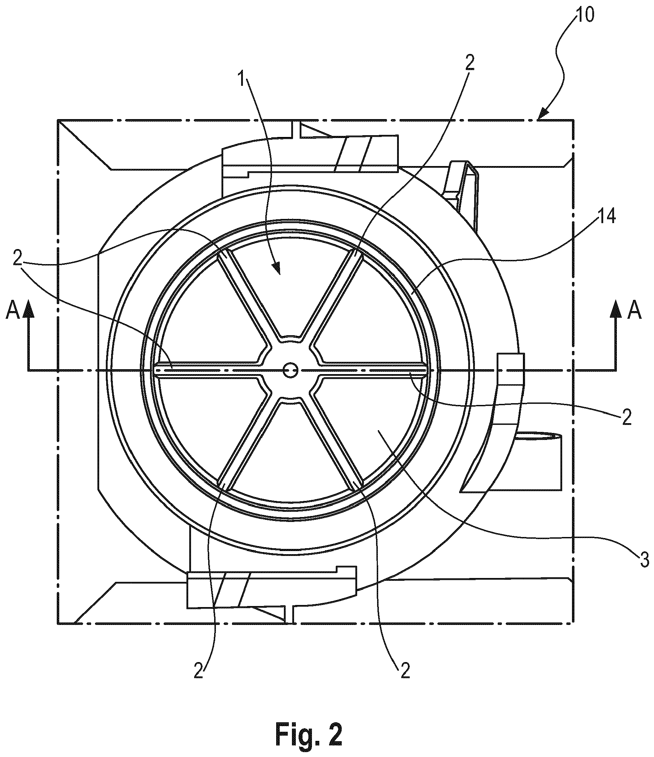

Fig. 2 zeigt eine Draufsicht auf eine Laugenpumpe 10 gemäß der Ausführungsform der vorliegenden Erfindung, die den Pumpenimpeller 1 umfasst. Zudem umfasst die Laugenpumpe 10 einen Pumpenflansch 11 und eine Antriebseinheit 13. Dabei kann der Pumpenimpeller 1 über eine Welle 12 von der Antriebseinheit 13 angetrieben werden. Der Pumpenimpeller 1 ist so in der Laugenpumpe 10 vorgesehen, dass die Laufradschaufeln 2 an der von der Antriebseinheit 13 abgewandten Seite der Laufradscheibe 3 vorgesehen sind. Der Pumpenflansch 11 wird von der Welle 13 durchdrungen. Die Welle 13 ist an dem Pumpenimpellers 1 befestigt. Bei der vorliegenden Ausführungsform ist die Welle 13 integral mit dem Pumpenimpeller 1 ausgebildet, bei einer alternativen Ausführungsform ist die Welle 13 in eine entsprechende Aussparung des Pumpenimpeller 1 eingepresst. Ferner ist die Welle 13 mit einer los-los- Lagerung in der Laugenpumpe 10 gehalten. Mit anderen Worten ist die Welle 13 mit einem Radiallager gehalten so gehalten, dass sie sich drehen kann. Aufgrund der los-los-Lagerung weist die Welle 13 eine gewisse hinsichtlich der Welle 13 axiale Verschiebung auf. Die Verschiebung ist insbesondere von der wirkenden hydraulischen Kraft innerhalb der Laugenpumpe 10 abhängig.

Der Pumpenflansch 11 umfasst einen runden Kragen 14 der in derselben Richtung wie die Welle 13 von dem Pumpenflansch 11 vorstehen und den Pumpenimpeller 11 umgibt. Dabei ist der Kragen 14 so dimensioniert, dass der Pumpenimpeller 1 stets von dem Kragen 14 umgeben ist, selbst wenn sich die Welle 13 zusammen mit dem Pumpenimpeller 1 in der Axialrichtung verlagert. Zwischen dem Pumpenimpeller 1 und dem Kragen 14 ist in einer Radialrichtung der Laufradscheibe ein Zwischenraum (im Folgenden Radialspalt genannt) ausgebildet.

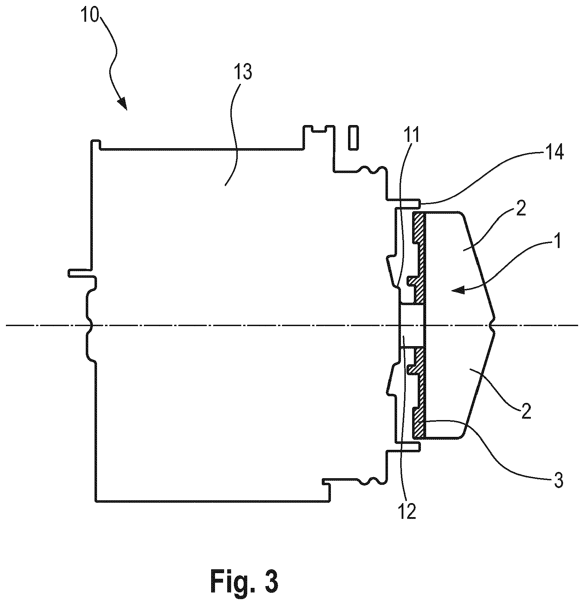

Fig. 3 ist eine Schnittansicht entlang der Schnittlinie A-A aus Fig. 2 und zeigt die Laugenpumpe 10 mit dem Pumpenimpeller 1. In Fig. 3 ist die Drehachse als gestrichelte Linie eingezeichnet. Gemäß der der Ausführungsform kann die Seite der Laufradscheibe 3, die dem Pumpenflansch 11 zugewandt ist eine spezielle hydraulisch vorteilhafte Ausformung aufweisen. Die Ausformung ist so ausgestaltet, dass hydraulische Sekundärströmungen zwischen der Laufradscheibe 3 und dem Pumpflansch 11 vermieden sind.

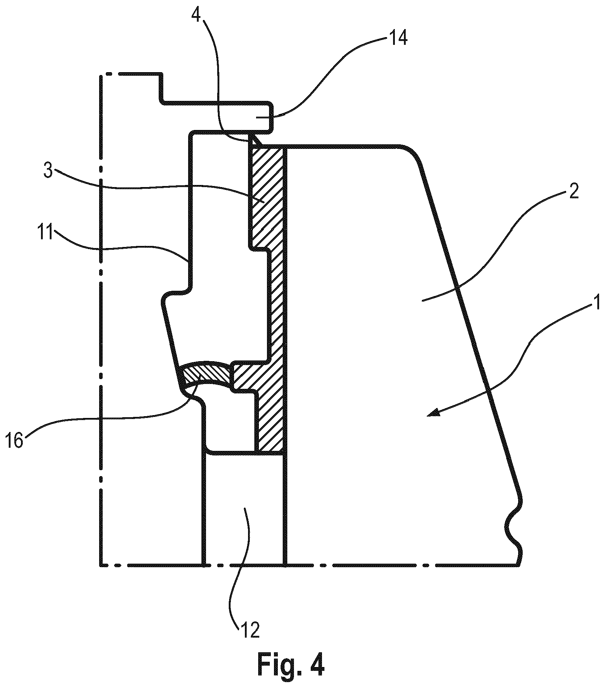

Fig. 4 ist ein Ausschnitt aus der Schnittansicht aus Fig. 3, die eine weitere Ausführungsform der vorliegenden Erfindung darstellt. Dabei umfasst die Laufradscheibe 3 eine Rippe 4. Die Rippe 4 steht von der Laufradscheibe 3 in den Radialspalt zwischen der Laufradscheibe 3 und dem Kragen 14 so hinein, dass der Radialspalt vollständig geschlossen ist. Mit anderen Worten ist die Rippe 4 im Betrieb der Laugenpumpe 10 in schleifendem Kontakt mit dem Kragen 14. Bei der Ausführungsform ist die Rippe 4 aus dem Mantelmaterial gebildet. Die Rippe 4 weist eine sich verjüngende Form in der Radialrichtung der Laufradscheibe 4 aus. Mit anderen Worten weist die Rippe 4 eine dreiecksartige Form auf, wobei eine Seite der Rippe 4 mit der Seite der Laufradscheibe 3 bündig ist, die den Pumpenflansch 11 zugewandt ist (siehe Fig. 4). Gemäß einer alternativen Ausführungsform der vorliegenden Erfindung ist die Rippe 4 so ausgestaltet, dass sie nur eine bestimmte Distanz in den Radialspalt zwischen der Laufradscheibe 3 und dem Kragen 14 hineinragt und diesen nur teilweise verschließt.

Ferner umfasst die Laugenpumpe 10 eine Wellenhülse 16, die zwischen der Laufradscheibe 3 und dem Puppenflansch 11 angeordnet ist. Die Wellenhülse 16 umgibt die Drehwelle 12 und ist an der Laufradscheibe 3 befestigt. Mit anderen Worten ist die Wellenhülse 16 mit dem Pumpenflansch 11 in einem schleifenden Kontakt. Die Wellenhülse 16 ist in einer Ausführungsform aus dem Mantelmaterial ausgebildet. In einer alternativen Ausführungsform ist die Wellenhülse aus einem Dichtmaterial, welches weicher als das Mantelmaterial ist, ausgebildet. Bei beiden Ausführungsformen ist die Wellenhülse 16 so ausgestaltet, dass sie einen axialen Zwischenraum (im folgenden Axialspalt genannt) zwischen dem Pumpenflansch 11 und der Laufradscheibe 3 abdichten kann. Mit anderen Worten kann die Wellenhülse 16 die axiale Bewegung des Pumpenimpellers 1 so kompensieren und ausgleichen, dass der Bereich um die Welle 12 stets abgedichtet ist und keine Haare, Flusen, Kalkreste und dergleichen in den Bereich unmittelbar um die Welle 12 herum eindringen können. Mit anderen Worten kann sich die Wellenhülse 16 in dem Fall, bei dem sich der Pumpenimpeller 1 in Richtung zu dem Pumpenflansch 11 bewegt, so verformen, dass keine übermäßigen Reibmomente an dem Element, mit dem die Wellenhülse 16 in schleifendem Kontakt ist, entstehen.

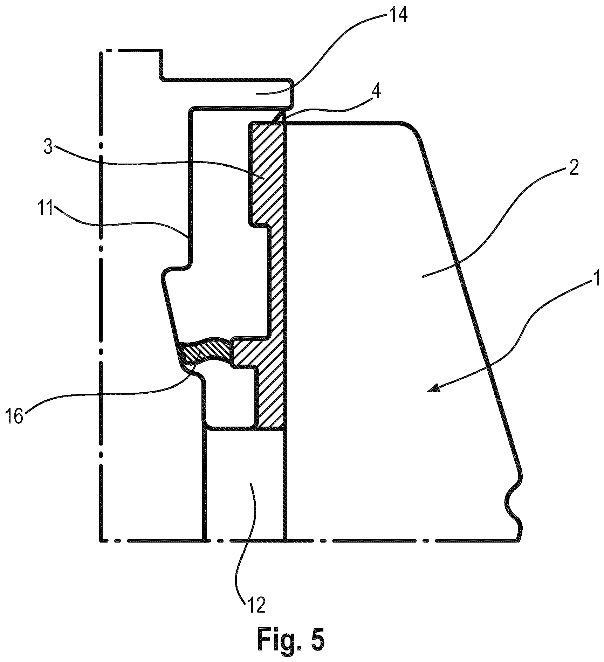

In Fig. 5 ist eine andere Ausführungsform der vorliegenden Erfindung dargestellt. Die Ausführungsform unterscheidet sich von der zuvor genannten darin, dass die Wellenhülse 16 durch ihre charakteristische Ausformung besonders leicht verformbar ist und dadurch Reibmomente an dem Element, mit dem die Wellenhülse 16 schleifendem Kontakt ist, weiter reduziert sind. Ferner ist bei der Ausführungsform die Rippe 4 so an der Laufradscheibe 3 ausgebildet, dass sie mit der Seite der Laufradscheibe 3 bündig ist, an der die Laufradschaufeln 2 angeordnet sind.

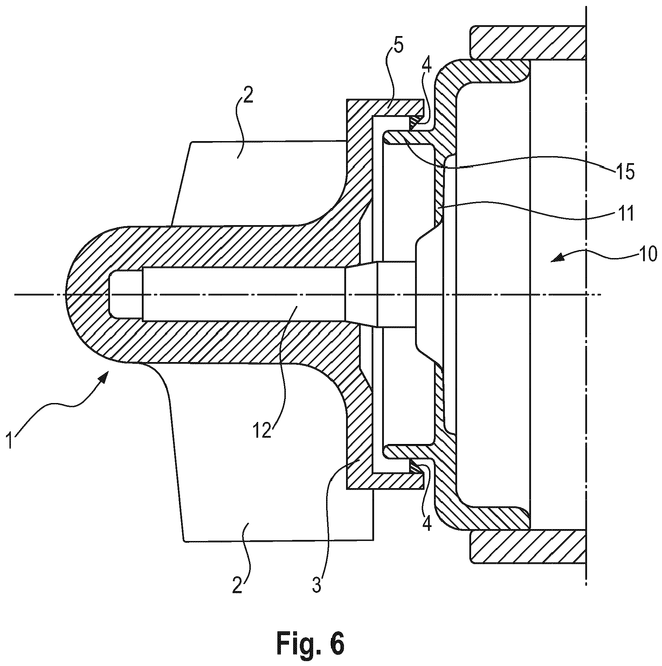

Fig. 6 zeigt eine weitere Ausführungsform der vorliegenden Erfindung. Genauer gesagt zeigt Fig. 6 eine Schnittansicht durch einen Teil der Laugenpumpe 10 und durch den Pumpenimpeller 1. Im Unterschied zu den obigen Ausführungsformen weist der Pumpenflansch 11 einem kreisförmigen Vorsprung 15 auf, dessen Außendurchmesser kleiner ist als der Außendurchmesser der Laufradscheibe 3. Die Welle 12 erstreckt sich durch den Vorsprung 15. Ferner weist die Laufradscheibe 3 einen umlaufenden Laufradscheibenkragen 5 auf, in dem der Vorsprung 15 aufgenommen ist. Mit anderen Worten ist der Radialspalt bei dieser Ausführungsform zwischen dem Vorsprung 15 und dem Laufradscheibenkragen 5 der Laufradscheibe 3 gebildet. Die Rippe 4 steht bei der Ausführungsform von dem Laufradscheibenkragen 5 der Laufradscheibe 4 radial nach innen in Richtung zu dem Vorsprung 15 des Pumpenflanschs 11 vor. Bei der in Fig. 6 dargestellten Ausführungsform ist die Rippe 4 so an dem Laufradscheibenkragen 5 angeordnet, dass die Rippe 4 bündig zu einer Außenendfläche des Laufradscheibenkragen 5 ist, die dem Pumpenflansch 11 zugewandt ist. Ferner weist die Rippe 4 auch bei dieser Ausführungsform eine sich in der Radialrichtung zu der Welle 13 verjüngende dreiecksartige Querschnittsform auf.

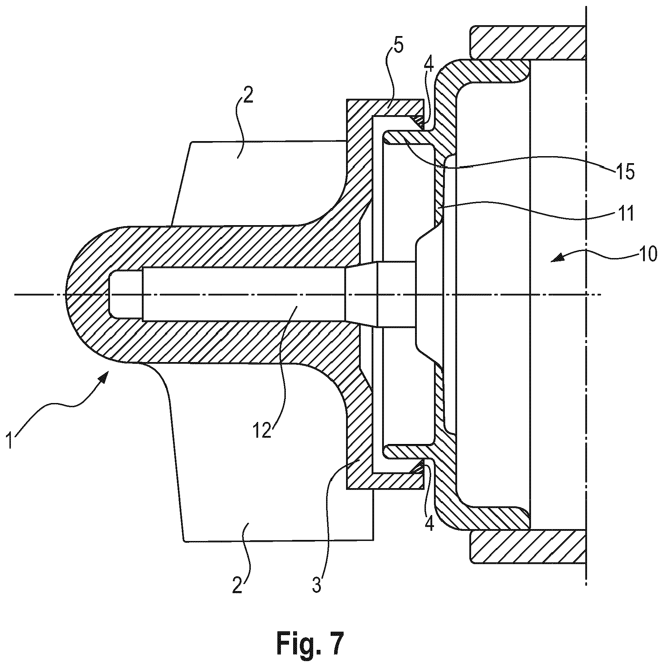

In Fig. 7 ist eine weitere Ausführungsform der vorliegenden Erfindung dargestellt. Im Wesentlichen entspricht diese Ausführungsformen der in Fig. 6 dargestellten Ausführungsform mit der Änderung, dass die Rippe 4 im Vergleich zu der in Fig. 6 dargestellten Anordnung in einer gespielten Anordnung angeordnet ist. Mit anderen Worten ist die Rippe 4 bei der Ausführungsform nicht bündig mit der Außenendfläche des Laufradscheibenkragen 5 angeordnet.

Im Folgenden wird nun der Vorteil der oben ausgeführten Ausführungsformen im Betrieb der Laugenpumpe 10 erläutert. Wenn ein Fremdkörper mit dem zu fördernden Fluid über eine Saugkammer der Laugenpumpe 10, durch ein zentrales Saugrohr in eine Druckkammer der Laugenpumpe 10 gelangt, wird der Gegenstand zwangsläufig mehrere Male Kontakt mit den Laufradschaufeln 2 in einem Schaufelkanal bekommen. Wenn die Laufradschaufeln 2 nun armiert bzw. beschichtet sind, wird der Impuls zwischen dem festen Fremdkörper und den Laufradschaufeln 2 stark reduziert, da das weiche Mantelmaterial über Verformung den Weg des Fremdkörpers verlangsamt. Das passiert in der realen Anwendung so oft, bis der Fremdkörper letztendlich durch einen entsprechenden Förderstromaufbau und einen gut gerichteten Impulsvektor aus der Druckkammer abtransportiert wird. Dabei wird die Oberfläche des weichen Mantelmaterials (Armierung bzw. Beschichtung) nicht beschädigt, da das verwendete Mantelmaterial eine genügend große Zähigkeit besitzt. Auch eine tangentiale Berührung mit scharfen Fremdkörpern wie Kalkablagerungen kann der zähen Oberfläche des Mantelmaterials weniger anhaben als eine Armierung oder Beschichtung, die härter ist als der üblicherweise verwendete Kunststoff. Dadurch ist eine Abnutzung oder Beschädigung an den Laufradschaufeln 2 oder der rückseitigen Laufradscheibe 3 stark begrenzt. Eine Veränderung der Pumpleistung (Förderstromverlust) über den Lebenszyklus der Laugenpumpe 10 ist damit auch weitestgehend ausgeschlossen. Ferner gleiten diese scharfkantigen Fremdkörper nicht mehr an den Laufradschaufeln 2 entlang und schädigen diese nicht durch Längsriefen, vielmehr rollen die Fremdkörper eher an dem beschichteten Pumpenimpeller 1 ab. Diese Abrollbewegung erfolgt mit einer langsameren Geschwindigkeit als die gleitende Bewegungsform an einer glatten Oberfläche. Somit verfügt der Fremdkörper nach dem Durchlaufen der Laugenpumpe 10 über eine geringere Kinetische Energie und kann damit auch die Oberfläche der Druckkammer weniger intensiv schädigen.

Im Folgenden wird ein Verfahren zum Herstellen des Pumpenimpellers gemäß einer Ausführungsform der vorliegenden Erfindung beschrieben. Demnach wird flüssiges Grundmaterial in eine Kunststoffspritzgussform eingespritzt. Anschließend wird das so eingespritzter Grundmaterial bis zu einem vorbestimmten ausscherte Grad ausgehärtet. In einem darauffolgenden Schritt wird die Spritzgussform so weit geöffnet, dass darin ein Hohlraum entsteht, der der Rippe 4 gemäß einer der obigen Ausführungsformen entspricht. Dann wird das Mantelmaterial in die Spritzgussform eingespritzt. Dadurch, dass das Grundmaterial noch nicht vollständig ausgehärtet ist geht das Mantelmaterial und das Grundmaterial eine stoffschlüssige Verbindung miteinander ein. Anschließend wird das Mantelmaterial und das Grundmaterial ausgehärtet.

Gemäß einer anderen Ausführungsform wird die Spritzgussform so geöffnet, dass auch ein weiterer Hohlraum entsteht, der der Wellenhülse 16 einer der obigen Ausführungsformen entspricht. Somit kann die Rippe 4 und die Wellenhülse 16 in einem Arbeitsschritt (Einspritzen von Mantelmaterial) ausgebildet sein. Gemäß einer weiteren zu bevorzugen den Ausführungsform wird die Spritzgussform so geöffnet, dass auch um die Laufradschaufeln 2 ein Hohlraum entsteht, sodass auch diese mit dem Mantelmaterial umspritzt werden.

Bei einer weiteren Ausführungsform umfasst das Verfahren nach dem Schritt des Einspritzens des flüssigen Mantelmaterials einen weiteren Schritt des Anpassens der Spritzgussform. Mit anderen Worten wird die Spritzgussform ein weiteres Mal ein Stück weit geöffnet, um einen weiteren Hohlraum darin zu schaffen. Bei einer Ausführungsform wird die Laufradscheibe 3 mit dem Mantelmaterial wie oben beschrieben umspritzt und anschließend die Spritzgussform ein weiteres Mal geöffnet, um die Rippe 4 aus dem Dichtmaterial auszubilden. Dazu wird das Dichtmaterial in den durch das zweite Öffnen entstandenen Hohlraum der Spritzgussform eingespritzt, bevor das Mantelmaterial vollständig ausgehärtet ist. Somit gehen auch das Mantelmaterial und das Dichtmaterial eine stoffschlüssige Verbindung miteinander ein. Bei einer weiteren Ausführungsform ist auf dieselbe Art und Weise auch die Wellenhülse 16 aus dem Dichtmaterial ausgebildet.

### Bezugszeichenliste

- 1: Pumpenimpeller
- 2: Laufradschaufel
- 3: Laufradscheibe
- 4: Rippe
- 5: Laufradscheibenkragen
- 10: Laugenpumpe
- 11: Pumpenflansch
- 12: Welle
- 13: Antriebseinheit
- 14: Kragen
- 15: Vorsprung
- 16: Wellenhülse

## Patentansprüche

1. Pumpenimpeller (1) mit Laufradschaufeln (2) für ein Haushaltsgerät,
wobei der Pumpenimpeller (1) aus einem Grundmaterial gebildet ist, und
wobei das Grundmaterial zumindest teilweise mit einem dauerelastischen Mantelmaterial, welches weicher als das Grundmaterial ist, beschichtet ist.

2. Pumpenimpeller (1) gemäß Anspruch 1, wobei das Grundmaterial und das Mantelmaterial stoffschlüssig miteinander verbunden sind.

3. Pumpenimpeller (1) gemäß Anspruch 1 oder 2, wobei der Pumpenimpeller (1) aufweist:
eine runde Laufradscheibe (3), die so vorgesehen ist, dass alle Laufradschaufeln (2) an einer Seite der Laufradscheibe (3) vorgesehen sind, und
eine in Umfangsrichtung der Laufradscheibe (3) umlaufende Rippe (4), die in einer Radialrichtung der Laufradscheibe (3) vorsteht.

4. Pumpenimpeller (1) gemäß Anspruch 3, wobei die Rippe (4) aus dem Mantelmaterial oder aus einem Dichtmaterial, das weicher als das Mantelmaterial ist, gebildet ist.

5. Pumpenimpeller (1) gemäß Anspruch 3 oder 4, wobei die Rippe (4) eine sich im Querschnitt verjüngende Form aufweist.

6. Laugenpumpe (10) für ein Haushaltsgerät umfassend:
einen Pumpenflansch (11),
eine Antriebseinheit (13), und
den Pumpenimpeller (1) gemäß einem der Ansprüche 1 bis 5,
wobei die Laugenpumpe (10) dazu ausgestaltete ist Fluid zu fördern und der Pumpenimpeller (1) so an dem Pumpenflansch (11) angeordnet ist, dass er über eine Welle (12) von der Antriebseinheit (13) drehend angetrieben werden kann.

7. Laugenpumpe (10) für ein Haushaltsgerät umfassend:
einen Pumpenflansch (11),
eine Antriebseinheit (13), und
den Pumpenimpeller (1) gemäß einem der Ansprüche 3 bis 5,
wobei die Laugenpumpe (10) dazu ausgestaltete ist Fluid zu fördern und der Pumpenimpeller (1) so an dem Pumpenflansch (11) angeordnet ist, dass er über eine Welle (12) drehend von der Antriebseinheit (13) angetrieben werden kann,
wobei die Seite der Laufradscheibe (3), an der keine Laufradschaufeln (2) vorgesehen sind, dem Pumpenflansch (11) zugewandt ist.

8. Laugenpumpe (10) gemäß Anspruch 7,
wobei der Pumpenflansch (11) einen ringförmigen Kragen (14) mit einem Innendurchmesser, der größer als der Außendurchmesser der Laufradscheibe (3) ist, aufweist,
wobei die Laufradscheibe (3) so in dem Kragen (14) aufgenommen ist, dass der Kragen (14) die Laufradscheibe (3) in der Umfangsrichtung umgibt, und
wobei die Rippe (4) so von der Laufradscheibe (3) radial nach außen vorsteht, dass ein Radialspalt zwischen der Laufradscheibe (3) und dem Kragen (14) minimiert oder vollständig geschlossen ist.

9. Laugenpumpe (10) gemäß Anspruch 7,
wobei der Pumpenflansch (11) einen kreisförmigen Vorsprung (15) mit einem Außendurchmesser, der kleiner als der Außendurchmesser der Laufradscheibe (3) ist, aufweist,
wobei die Laufradscheibe (3) einen umlaufenden Laufradscheibenkragen (5) aufweist, in den der Vorsprung (15) aufgenommen ist, und
wobei die Rippe (4) so von dem Laufradscheibenkragen (5) der Laufradscheibe (3) radial nach innen vorsteht, dass ein Radialspalt zwischen der Laufradscheibe (3) und dem Vorsprung (15) minimiert oder vollständig geschlossen ist.

10. Laugenpumpe (10) gemäß einem der Ansprüche 7 bis 9, wobei die Laugenpumpe (10) eine elastische, die Welle (12) umgebende Wellenhülse (16) umfasst, die zwischen der Laufradscheibe (3) und dem Pumpenflansch (11) vorgesehen ist, wobei die Wellenhülse (16) so ausgestaltet ist, dass sie mit der Laufradscheibe (3) und dem Pumpenflansch (11) in Kontakt ist, selbst wenn sich die Laufradscheibe (3) relativ zu dem Pumpenflansch (11) verlagert, so dass ein Axialspalt zwischen der Laufradscheibe (3) und dem Pumpenflansch (11) im Wesentlichen abgedichtet ist.

11. Laugenpumpe (10) gemäß dem Anspruch 10, wobei die Wellenhülse (16) entweder an dem Pumpenflansch (11) oder an der Laufradscheibe (3) angebracht ist.

12. Laugenpumpe (10) gemäß Anspruch 10 oder 11, wobei die Wellenhülse (16) aus dem Mantelmaterial oder aus einem/dem Dichtmaterial, das weicher als das Mantelmaterial ist, gebildet ist.

13. Haushaltsgerät mit:
einem Behandlungsraum, und
der Laugenpumpe (10) gemäß einem der Ansprüche 6 bis 12, die dazu ausgestaltet ist ein Fluid aus dem Behandlungsraum abzupumpen.

14. Verfahren zum Herstellen eines Pumpenimpellers (1) umfassend:
Einspritzen von flüssigem Grundmaterial in eine Spritzgussform,
Aushärten des Grundmaterials bis zu einem vorbestimmten Aushärtegrad,
Anpassen der Spritzgussform, um einen vorbestimmten Raum darin zu schaffen,
Einspritzen von flüssigem Mantelmaterial, sodass das Grundmaterial zumindest teilweise umspritzt wird und das Grundmaterial und das Mantelmaterial eine stoffschlüssige Verbindung eingehen, und
Aushärten des Pumpenimpellers (1).

15. Verfahren zum Herstellen des Pumpenimpellers (1) gemäß Anspruch 14, wobei das Verfahren zwischen dem Schritt des Einspritzens von flüssigem Mantelmaterial und dem Aushärten des Pumpenimpellers (1) ferner die folgenden Schritte umfasst:
Aushärten des Grundmaterials und des Mantelmaterials bis zu einem vorbestimmten Aushärtegrad,
Anpassen der Spritzgussform, um einen vorbestimmten Raum darin zu schaffen, und
Einspritzen von flüssigem Dichtmaterial, um eine Rippe (4) und/oder eine Wellenhülse (16) zu bilden.
